# EUROPÄISCHE PATENTSCHRIFT

(11) **EP 2 743 320 B1**
(45) Veröffentlichungstag und Bekanntmachung des Hinweises auf die Patenterteilung: **15.04.2015**
(21) Anmeldenummer: 12197454.7
(22) Anmeldetag: 17.12.2012
(51) Int. Cl.: C09D 183/02, C09D 183/04, C09D 5/10, C21D 7/13, C08K 3/08

(54) **Mehrstufiges Verfahren zur Beschichtung von Stahl vor einer Warmumformung**
Multistage process for coating steel prior to thermoforming
Procédé en plusieurs étapes de recouvrement d'acier avant un formage à chaud

(43) Veröffentlichungstag der Anmeldung: 18.06.2014
(73) Patentinhaber: Henkel AG & Co. KGaA, 40589 Düsseldorf (DE)
(72) Erfinder: Roth, Marcel, 40589 Düsseldorf (DE); Wark, Reiner, 42103 Wuppertal (DE); Möller, Thomas, 40593 Düsseldorf (DE); Wilke, Eva, 42781 Haan (DE); Sundermeier, Uta, 42799 Leichlingen (DE); Göske-Krajnc, Manuela, 40721 Hilden (DE)

(56) Entgegenhaltungen:
- EP-B1- 1 809 714
- DE-A1-102008 020 216
- US-A1- 2012 187 343

## Beschreibung

Die vorliegende Erfindung betrifft ein mehrstufiges Verfahren zur Aufbringung einer schweißbaren Verzunderungsschutzschicht auf Stahl, bei dem auf der metallischen Stahloberfläche zunächst eine metallpigmentfreie silikatische Dünnschicht erzeugt und anschließend ein Nassfilm eines aushärtbaren pigmenthaltigen Lackes aufgebracht und ausgehärtet wird, wobei der aushärtbare pigmenthaltige Lack ein in einer Flüssigphase gelöstes Bindemittel, das Hydrolysate und/oder Kondensate mindestens eines Silans/Siloxans und/oder mindestens ein Silikonharz umfasst, und sowohl zumindest ein metallisches Pigment von Aluminium als auch zumindest ein metallisches Pigment von Bismut jeweils in partikulärer Form enthält. Ferner betrifft die vorliegende Erfindung eine bevorzugte aushärtbare pigmenthaltige Lackrezeptur zur Anwendung im erfindungsgemäßen Verfahren, sowie einen Warmumformprozess von im erfindungsgemäßen Verfahren beschichteten Halbzeugen aus Stahl. Ebenso wird von vorliegender Erfindung ein warmumgeformtes Stahlbauteil geeignet für elektrische Punktschweißverfahren und zur Aufbringung eines vor Korrosion schützenden organischen Lackschichtaufbaus umfasst, das im erfindungsgemäßen Verfahren erhältlich ist.

Im Automobilbau werden einige Bauteile der Fahrzeugkarosserie aus hochfesten Spezialstählen gefertigt, die bei gleicher Stabilität des Bauteils einen geringeren Materialeinsatz ermöglichen. Diese Spezialstähle sind häufig Bor-Mangan-legierte Stähle (22MnB5-Typ), die die Eigenschaft besitzen bei Erwärmen auf Temperaturen oberhalb der Rekristallisationstemperatur und nachfolgender rascher Abkühlung, die eine diffusionsbedingte Phasenumwandlung der Austenitisierung verhindert, hochfeste Stähle zu liefern. Die Warmumformung leistet nun Formgebung des Halbzeugs aus Stahl und Härtung desselben in einem Prozess. Bei der Warmformgebung wird das in den austenitischen Bereich aufgeheizte Halbzeug aus Stahl, zumeist ein Stahlblech, das ggf. in einer Kaltumformung bereits vorgeformt wurde, im glühenden Zustand umgeformt und anschließend kontrolliert abgeschreckt. Der Prozess der Warmformgebung bringt naturgemäß mit sich, dass beim Aufheizen auf 800 - 1000 °C eine erhebliche Verzunderung der Stahloberfläche erfolgt, so dass ein erheblicher Aufwand betrieben wird das Entstehen von Verzunderungsschichten weitgehend zu reduzieren. Das Aufheizen im Ofen des Warmumformprozesses erfolgt häufig unter Schutzgasatmosphäre auch um die Verkohlung der Stahloberfläche zu verhindern. Diese Maßnahme ist jedoch sehr aufwendig und bei weitem nicht ausreichend um die Verzunderung der Stahloberfläche beim Übergang des Halbzeugs vom Ofen in die Presse gänzlich zu unterdrücken. Die beim Warmumformprozess dennoch entstehenden Zunderschichten eignen sich weder für die nachfolgenden Fertigungsprozesse wie Punktschweißen noch für die in der Metalloberflächenbehandlung typischen Folgeprozesse wie Phosphatierung und Elektrotauchlackierung, so dass die Zunderschichten aufwendig üblicherweise durch mechanische Methoden wie Sandstrahlen oder Trockeneisstrahlen vom umgeformten Bauteils entfernt werden müssen, was neben dem zusätzlichen Aufwand auch einen erheblichen Materialverlust bedingt.

Im Stand der Technik wird daher auf der Stahloberfläche eine dünne Metallschicht, beispielsweise eine Alitierung aufgebracht, so dass auf diese Wiese der direkte Kontakt der Stahloberfläche mit Sauerstoff unterbunden wird und beim Warmumformen lediglich eine thermisch stabile verhältnismäßig dünne Aluminiumoxidschicht gebildet wird. Der Vorteil dieser Alitierung besteht darin, dass die zum Bauteil warmumgeformten Halbzeuge gut punktschweißbar sind, so dass diese aus dem Warmumformprozess kommenden Bauteile mit übrigen metallischen Bauteilen konventionell zusammengefügt werden können, beispielsweise zu einer Automobilkarosse. Darüber hinaus können auf den alitierten und zum Bauteil warmumgeformten Halbzeuge nach Dekapierung der Oxidschicht gut anhaftende organische Lacksysteme nach vorhergehender Konversionsbehandlung wie Phosphatierung aufbauen.

Dennoch ist die Aufbringung einer Alitierung ein energieintensiver Prozess, so dass in der jüngeren Patentliteratur vorgeschlagen wurde, Aluminium-pigmentierte anorganische Lacksysteme auf Basis von Silikonharzen als Verzunderungsschutzschicht unmittelbar auf die Stahloberfläche aufzubringen. Die EP 1809714 B1 offenbart deratige Schutzschichten für die Warmumformung von Bor-Mangan legierten Stählen und zeigt auf, dass hierüber ebenfalls hervorragend vor Verzunderung schützende Beschichtungen realisiert werden können, die nach der Warmumformung zudem punktschweißbar und überlackierbar sind.

Gegenüber diesem Stand der Technik besteht die Aufgabe der vorliegenden Erfindung einerseits darin, den Verzunderungsschutz von in Wesentlichen anorganischen Beschichtungen nach der Art der EP 1809714 B1 weiter zu erhöhen, ohne an Punktschweißbarkeit einzubüßen, und anderseits ein Verfahren zur Beschichtung von Stahl geeignet zur Warmumformung bereitzustellen, aus dem nach dem Warmumformprozess Stahlbauteile hervorgehen, die bei nachfolgendem herkömmlichen organischen Lackschichtaufbau einen deutlich verbesserten Schutz vor korrosiver Delamination aufweisen.

Überraschenderweise wurde gefunden, dass ein hervorragender Verzunderungsschutz von Stahl bei der Warmformgebung und eine sehr gute Punktschweißbarkeit der warmumgeformten Stähle mit Beschichtungen auf Basis von Hydrolysaten oder Kondensaten von Silanen/Siloxanen und/oder mindestens ein Silikonharz enthaltend zusätzlich metallische Pigmente von Aluminium und Bismut erzielt werden kann. Um eine gute Haftung der Beschichtung beim Warmumformprozess und damit an sich einen guten Verzunderungsschutz zu gewährleisten, erfolgt zunächst eine silikatische Vorbeschichtung der Stahloberfläche bevor die zuvor genannte pigmenthaltige Beschichtung auf Basis der Hydrolysate oder Kondensate von Silanen/Siloxanen und/oder ein Silikonharz aufgebracht wird. Die silikatische Dünnschicht bewirkt zudem überraschend eine deutliche Verringerung der korrosiven Delamination von nach der Warmumformung aufgebrachten organischen Lackschichten, insbesondere von Elektrotauchlackierungen.

Die Aufgabe der vorliegenden Erfindung wird also gelöst durch ein mehrstufiges Verfahren zur Aufbringung einer schweißbaren Verzunderungsschutzschicht auf Stahl, bei dem auf der metallischen Stahloberfläche zunächst eine metallpigmentfreie silikatische Dünnschicht erzeugt und anschließend ein Nassfilm eines aushärtbaren pigmenthaltigen Lackes aufgebracht und ausgehärtet wird, wobei der aushärtbare pigmenthaltige Lack ein in einer Flüssigphase gelöstes Bindemittel, das Hydrolysate und/oder Kondensate mindestens eines Silans/Siloxans und/oder mindestens ein Silikonharz umfasst, und sowohl zumindest ein metallisches Pigment von Aluminium als auch zumindest ein metallisches Pigment von Bismut jeweils in partikulärer Form enthält.

Als "metallische Stahloberfläche" werden erfindungsgemäß von Ölen und Flugrost befreite befreite Stahloberflächen bezeichnet. Eine derartige Oberfläche kann durch nasschemische Verfahren, bspw. mittels alkalischer Beizlösungen, bereitgestellt werden, die dem Fachmann im Bereich der Metalloberflächenbehandlung bekannt sind.

Als "Dünnschicht" wird im Rahmen der vorliegenden Erfindung eine dünne Beschichtung auf der metallischen Substratoberfläche mit einer Schichtdicke von weniger als 0,5 µm verstanden.

Als "metallpigmentfrei" gelten Dünnschichten erfindungsgemäß dann, wenn sie weniger als 1 Gew.-% an metallischen Pigmenten enthalten.

Als "silikatisch" werden erfindungsgemäß solche Dünnschichten bezeichnet, die kondensierte SiO₄-Einheiten aufweisen.

Ein metallisches Pigment von Aluminium besteht erfindungsgemäß zu zumindest 90 At.-% aus Aluminium. Ein metallisches Pigment von Bismut besteht erfindungsgemäß zu zumindest 60 At.-% aus Bismut.

Ein Lack ist im Sinne der vorliegenden Erfindung aushärtbar, wenn er durch Trocknen mit oder ohne Einsatz technischer Maßnahmen zur gezielten Wärmezufuhr einen Feststoff bildet, der bei 20 C eine Löslichkeit in entionisiertem Wasser (κ<1 µScm⁻¹) von weniger als 0,01 g/l aufweist.

Das Bindemittel des aushärtbaren und pigmenthaltigen Lackes ist im erfindungsgemäßen Verfahren ausgewählt aus Hydrolysaten/Kondensaten von Silanen/Siloxanen und/oder aus Silikonharzen. Derartige im Wesentlichen anorganische Bindemittel beginnen typischerweise bei Temperaturen oberhalb von 300 °C zu pyrolysieren und bilden dabei eine rein silikatische Matrix aus, die die genannten metallischen Pigmente umschließt. Diese silikatische Matrix entsteht im erfindungsgemäßen Verfahren demnach bereits beim Aufheizen des erfindungsgemäß beschichteten Stahlsubstrats im Ofen unmittelbar vor der Umformung. Während des Umformprozesses bildet sich unter dem hohen Druck der Press- und Umformwerkzeuge Beschichtungen eine keramische Beschichtung aus, die gesinterten Schichten von Silikaten ähneln, und daher eine entsprechend hohe mechanische und thermische Stabilität aufweisen. Gleichzeitig gehen die metallischen Pigmente der pyrolysierten Lackbeschichtung bei der Warmumformtemperatur in den schmelzflüssigen Zustand über. Es findet also beim Warmumformprozess des im erfindungsgemäßen Verfahren beschichteten Stahlsubstrats eine Konversion der ausgehärteten Lackbeschichtung in eine keramische silikatische Beschichtung enthaltend metallische Phasen von Aluminium und Bismut statt. Diese Konversion geht aufgrund der im erfindungsgemäßen Verfahren aufgebrachten metallpigmentfreien silikatischen Dünnschicht als Zwischenbeschichtung überraschenderweise nicht mit Schichtabplatzungen der pyrolysierten Beschichtung enthaltend die Metallpigmente einher, so dass das Metallsubstrat während der pyrolytischen Konversion der ausgehärteten Lackbeschichtung in der Aufheizphase und beim Warmumformen weiterhin optimal vor Verzunderung geschützt wird. Der durch die metallpigmentfreie silikatische Dünnschicht vermittelte hervorragende Haftgrund für den pyrolysierten pigmenthaltigen Lack bedingt zudem, dass ein nach dem Warmumformprozess vorgenommener organischer Lackschichtaufbau bei Exposition mit korrosiven Medien in weitaus geringerem Maße delaminert.

Der metallpigmentfreien silikatischen Dünnschicht, die in einem erfindungsgemäßen Verfahren aufzubringen ist, bevor die Beschichtung mit dem aushärtbaren pigmenthaltigen Lack erfolgt, kommt demnach eine Schlüsselfunktion zu. Als Zwischenschicht stabilisiert sie die Haftung der vor Verzunderung schützenden pigmenthaltigen Lackbeschichtung in der Aufheizphase des Warmumformprozesses, in der eine Pyrolyse zu einer reinen silikatischen Beschichtung vollzogen wird, und sichert auf diese Weise, dass die silikatisierte metallpigmenthaltige Beschichtung das Substrat weiterhin effektiv vor einer Verzunderung schützen kann. Darüber hinaus zeigt sich, dass ein nach der Warmumformung von erfindungsgemäß beschichteten Stahlsubstrate erfolgender organischer Schichtaufbau, beispielsweise eine Elektrotauchlackierung, im Vergleich zu warmumgeformten Stählen, auf denen keine metallpigmentfreie silikatische Dünnschicht aufgebracht wurde, besser vor korrosiver Delamination geschützt ist.

Es konnte gezeigt werden, dass solche metallpigmentfreie silikatische Dünnschichten besonders gute haftvermittelnde Eigenschaften bei erfindungsgemäß zum Zwecke der Warmumformung beschichteten Stahlsubstraten besitzen, für die ein Atomverhältnis von Silizium zu Sauerstoff in der silikatischen Dünnschicht von kleiner als 2 : 3 realisiert ist. Derartige metallpigmentfreie silikatische Dünnschichten sind daher in einem erfindungsgemäßen Verfahren bevorzugt zu erzeugen.

Das Atomverhältnis von Silizium zu Sauerstoff in der silikatischen Dünnschicht kann mittels "Glow Discharge Optical Emission Spectroscopy" (GD-OES) bestimmt werden, wobei für die Quantifizierung eine Kalibrierungen an einer aus der Gasphase aufgesputterten SiO₂ Beschichtung (Atomverhältnis Si : O von 1 : 2) vorzunehmen ist. Weiterhin ist es vorteilhaft, wenn die metallpigmentfreie silikatische Dünnschicht im erfindungsgemäßen Verfahren in einer solchen Schichtauflage aufgebracht wird, das zumindest 10 mg/m², besonders bevorzugt zumindest 40 mg/m² bezogen auf das Element Silizium resultieren, um eine ausreichende Haftung der ausgehärteten Beschichtung des pigmenthaltigen Lackes während des Warmumformprozesses zu erreichen. Bevorzugt ist die Schichtauflage jedoch geringer als 200 mg/m², da ansonsten die Schweißbarkeit der erfindungsgemäß beschichten Halbzeuge von Stahl nach der Warmumformung aufgrund der elektrisch isolierenden Eigenschaften der silikatischen Dünnschicht deutlich verschlechtert wird.

Die metallpigmentfreie silikatische Dünnschicht kann mittels im Stand der Technik bekannter Methoden aufgebracht werden. Zu derartige Methoden zählen die Physical Vapour Deposition (PVD), Chemical Vapour Deposition (CVD) und Plasmabeschichtungsverfahren. Im PVD Verfahren wird die oxidische Dünnschicht enthaltend Silizium beispielsweise durch Sputterdeposition erhalten, wobei im Hochvakuum entsprechende Sputtertargets aus SiO₂ mit einer Ionenquelle beschossen und molekulare Fragmente des Targets in die Gasphase überführt werden, aus der die Abscheidung auf dem Substrat erfolgt. Da PVD Verfahren nur unter Vakuumbedingungen anwendbar sind, die beispielsweise im quasikontinuierlichen Betrieb einer Bandanlage technisch nur sehr schwer und unter erheblichem Aufwand realisiert werden können, sind CVD Verfahren im erfindungsgemäßen Verfahren zur Aufbringung der silikatischen Dünnschicht bevorzugt. CVD-Verfahren, die unter Atmosphärendruck angewandt werden können, sind Pyrolyse-Verfahren unter Verwendung von Silizium-enthaltenden Precursor-Verbindungen (CCVD-Verfahren, Combustion Chemical Vapour Deposition).

In einer bevorzugten Ausführungsform des erfindungsgemäßen Verfahrens wird die metallpigmentfreie silikatische Dünnschicht aus der Gasphase in einem pyrolytischen Verfahren erzeugt, in dem einem brennbaren Trägergas ein Organosilan, vorzugsweise ausgewählt aus Tetraalkoxysilanen mit nicht mehr als 5 Kohlenstoff-Atomen pro AlkoxyGruppe zugemischt wird, das zusammen mit dem Trägergas in einer Flamme zur Verbrennung gebracht wird, wobei die oxidische Dünnschicht enthaltend Silizium innerhalb einer von der Flamme begrenzten Fläche auf dem Metallband gebildet wird. Derartig aus der Gasphase in einem flammenpyrolytischen Verfahren abgeschiedene silikatische Dünnschichten haften hervorragend auf dem metallischen Substrat und besitzen eine hohe Homogenität hinsichtlich ihrer elementaren Zusammensetzung. Um im erfindungsgemäßen Verfahren fest haftende silikatische Dünnschichten zu erhalten, enthalten die im pyrolytischen Verfahren eingesetzten brennbaren Mischungen vorzugsweise nicht mehr als 2 Gew.-% des Organosilans. Das Trägergas ist dabei vorzugsweise ausgewählt aus einem Gemisch enthaltend Sauerstoff und Wasserstoff oder aus brennbaren Flüssiggasen, die wiederum vorzugsweise ausgewählt sind aus Alkanen mit zumindest 3 Kohlenstoffatomen, aber nicht mehr als 10 Kohlenstoffatomen oder aus einer Mischung dieser Alkane.

In besonderem Maße eignen sich jedoch auch nasschemische Verfahren zur Erzeugung einer silikatischen Dünnschicht, da sie eine einfache Applikation durch Tauch-, Gieß-, Spritz-, Walzenauftrags- oder Schleuderverfahren erlauben und damit der verfahrenstechnische Aufwand gering ist. Die nasschemische Aufbringung ist daher im erfindungsgemäßen Verfahren bevorzugt.

Von den nasschemischen Verfahren sind beispielsweise solche Verfahren geeignet die im Stand der Technik als Sol-Gel-Verfahren bezeichnet werden. Hierbei werden vorzugsweise Tetraalkoxysilanen in wässriger Lösung eingesetzt, die beim Eintrocknen zu polymeren anorganischen SiO₂-Gerüsten vernetzen. Üblicherweise wird dieses spezielle nasschemische Verfahren zur Beschleunigung der Vernetzungsreaktion und zur Ausbildung glasartiger Beschichtungen bei erhöhter Temperatur durchgeführt.

In einem besonders bevorzugten erfindungsgemäßen Verfahren erfolgt die nasschemische Aufbringung der silikatischen Dünnschicht dadurch, dass ein Nassfilm einer alkalischen wässrigen Zusammensetzung auf die Stahloberfläche aufgebracht wird, der vorzugsweise vor der Aufbringung des aushärtbaren pigmenthaltigen Lackes getrocknet wird, wobei die alkalische wässrige Zusammensetzung
a) Wasserglas mit einem molaren Verhältnis von SiO₂ zu M₂O von zumindest 3 : 2, aber nicht mehr als 7 : 1, wobei M ausgewählt ist aus Alkalimetallen und/oder quarternären Ammoniumverbindungen, und
b) ein oder mehrere Organosilane (A) enthält, die jeweils zumindest einen hydrolysierbaren Substituenten aufweisen, der bei Hydrolyse als Alkohol, der bei einem Atmosphärendruck von 1 bar einen Siedepunkt unterhalb von 100 °C aufweist, abgespalten wird, und die am jeweiligen Silizium-Atom ein bis drei nicht hydrolysierbare Substituenten tragen, wobei die Gesamtzahl der Substituenten an den jeweiligen Siliziumatomen der Organosilane (A) vier ist,
wobei das molare Verhältnis der Gesamtmenge an Organosilanen mit zumindest einem hydrolysierbaren Substituenten bezogen auf das Element Silizium zur Gesamtmenge an Silizium-Atomen in der alkalischen wässrigen Zusammensetzung kleiner als 1 : 3 ist, jedoch vorzugsweise zumindest 1 : 20, besonders bevorzugt zumindest 1:10 beträgt.

Organosilane (A) im Sinne der vorliegenden Erfindung weisen also zumindest eine kovalente Si-C Bindung auf, über die ein sogenannter "nicht hydrolysierbarer Substituent" an das Silizium-Atom gebunden wird. Wohingegen Organosilane mit hydrolysierbaren Substituenten in Wasser unter Abspaltung des Substituenten Si-O Bindungen ausbilden.

Vorzugsweise ist in einem erfindungsgemäßen Verfahren, bei dem die nasschemische Aufbringung einer metallpigmentfreien silikatischen Dünnschicht mittels der alkalischen wässrigen Zusammensetzung erfolgt, das Molverhältnis aller solchen Silizium-haltigen Verbindungen, die keine der unter a) und b) genannten Verbindungen darstellen, bezogen auf das Element Silizium zur Gesamtmenge an Silizium-Atomen kleiner als 1 : 20.

Die Organosilane (A) der alkalischen wässrigen Zusammensetzung zur nasschemischen Aufbringung der silikatischen Dünnschicht sind im erfindungsgemäßen Verfahren vorzugsweise ausgewählt aus solchen Organosilanen, bei denen zumindest ein nicht hydrolysierbarer Substituent zumindest eine primäre Amino-Gruppe aufweist. Derartige Organosilane (A) verbessern deutlich die korrosionsschützenden Eigenschaften der erfindungsgemäß beschichteten und warmumgeformten Halbzeuge aus Stahl, insbesondere wenn nachträglich ein organischer Lackschichtaufbau, beispielsweise über eine Elektrotauchlackierung, erfolgt.

Eine in erfindungsgemäßen Verfahren bevorzugte Anwendungslösung zur Aufbringung des Nassfilms der alkalischen wässrigen Zusammensetzung enthält
a) 1-25 Gew.-% bezogen auf SiO₂ an Wasserglas mit einem molaren Verhältnis von SiO₂ zu M₂O von zumindest 3 : 2, aber nicht mehr als 7 : 1, wobei M ausgewählt ist aus Alkalimetallen und/oder quarternären Ammoniumverbindungen;
b) 0,2-10 Gew.-% bezogen auf das Element Silizium an Organosilanen (A), die jeweils zumindest einen hydrolysierbaren Substituenten aufweisen, der bei Hydrolyse als Alkohol, der bei einem Atmosphärendruck von 1 bar einen Siedepunkt unterhalb von 100 °C aufweist, abgespalten wird, und die am jeweiligen Silizium-Atom ein bis drei nicht hydrolysierbare Substituenten tragen, die zumindest eine primäre Amino-Gruppe aufweisen, wobei die Gesamtzahl der Substituenten an den jeweiligen Siliziumatomen der Organosilane (A) vier ist;
c) nicht mehr als 2 Gew.-%, vorzugsweise nicht mehr als 1 Gew.-%, besonders bevorzugt nicht mehr als 0,5 Gew.-% bezogen auf das Element Silizium an Organosilanen mit jeweils zumindest einem hydrolysierbaren Substituenten, die jedoch keine Organosilane (A) sind;
d) nicht mehr als 0,5 Gew.-%, vorzugsweise nicht mehr als 0,1 Gew.-% bezogen auf das Element Silizium an Organosilanen mit solchen hydrolysierbaren Substituenten, die bei ihrer Hydrolyse Halogenwasserstoffe abspalten;
e) nicht mehr als 1,0 Gew.-%, vorzugsweise nicht mehr als 0,5 Gew.-%, besonders bevorzugt nicht mehr als 0,1 Gew.-% bezogen auf das Element Silizium an Silanen mit jeweils vier hydrolysierbaren Substituenten; und vorzugsweise
f) nicht mehr als 0,5 Gew.-%, besonders bevorzugt nicht mehr als 0,1 Gew.-% an anderen Silizium-haltigen Verbindungen, die keine der unter a)-e) genannten Verbindungen darstellen,
wobei das molare Verhältnis der Gesamtmenge an Organosilanen mit zumindest einem hydrolysierbaren Substituenten bezogen auf das Element Silizium zur Gesamtmenge an Silizium-Atomen in der alkalischen wässrigen Zusammensetzung kleiner als 1 : 3 ist, jedoch vorzugsweise zumindest 1 : 20, besonders bevorzugt zumindest 1:10 beträgt.

Die Aufbringung dieser ersten Beschichtung, die eine metallpigmentfreie silikatische Dünnschicht darstellt, bewirkt einen verbesserten Haftgrund für die eigentliche Verzunderungsschutzschicht, wobei die Haftung auch während des Warmumformprozesses also auch nach Silikatisierung des vernetzten Bindemittels der eigentlichen Verzunderungsschutzschicht gewahrt wird. Andererseits stellt die metallpigmentfreie silikatische Dünnschicht ein isolierendes Dielektrikum dar, das prinzipiell die elektrische Punktschweißbarkeit von warmumgeformten mit metallpigmenthaltigen Verzunderungsschutzschichten versehenen Stählen verschlechtert. Demgemäß gilt es den aushärtbaren, pigmenthaltigen Lack derart zu formulieren, dass die elektrische Punktschweißbarkeit nach der Warmumformung des beschichteten Stahls hinreichend ist. Die Anforderungen an die Punktschweißbarkeit werden im erfindungsgemäßen Verfahren mehr als erfüllt, wobei weitere bevorzugte Ausführungsformen des aushärtbaren, pigmenthaltigen Lackes im Folgenden beschrieben sind.

Für einen hinreichenden Schutz vor Verzunderung beim Warmumformen des Stahls ist es bevorzugt, dass der aushärtbare pigmenthaltige Lack im erfindungsgemäßen Verfahren das metallische Pigment Aluminium mit einem Anteil von zumindest 20 Gew.-%, besonders bevorzugt zumindest 30 Gew.-% bezogen auf den Feststoffanteil enthält. Liegt der Anteil an metallischen Pigmenten von Aluminium jedoch oberhalb von 60 Gew.-% bezogen auf den Feststoffanteil, so resultieren pastöse Lackformulierungen, die einerseits schwer applizierbar sind und andererseits nach dem Aushärten sehr spröde Beschichtungen liefern, die nicht mehr umformbar sind, ohne dass Risse und Abplatzungen auftreten. Vorzugsweise enthält der Lack daher im erfindungsgemäßen Verfahren nicht mehr als 60 Gew.-% an metallischen Pigmenten von Aluminium bezogen auf den Feststoffanteil.

Unter Bewahrung des Verzunderungsschutzes beim Warmumformprozess werden hervorragende Eigenschaften der im erfindungsgemäßen Verfahren bereitgestellten Beschichtung hinsichtlich Schweißbarkeit, insbesondere der Punktschweißbarkeit, nach einer Warmumformung der Halbzeuge aus Stahl insbesondere dann erzielt, wenn das Gewichtsverhältnis der metallischen Pigmente von Aluminium zu den metallischen Pigmenten von Bismut im Lack bezogen auf das jeweilige metallische Element im Bereich von 2 : 1 bis 15 : 1, insbesondere im Bereich von 4 : 1 zu 10 : 1 liegt. Derartige Gewichtsverhältnisse der metallischen Pigmente zueinander sind in Lacken des erfindungsgemäßen Verfahrens daher bevorzugt einzustellen.

Weiterhin ist es vorteilhaft, wenn die metallischen Pigmente aus Aluminium im Lack des erfindungsgemäßen Verfahrens in Plättchenform vorliegen, da derartige Plättchen beim Auftragen eines Nassfilms des Lackes dazu tendieren sich überlappend und schuppenartigen über der Stahloberfläche auszurichten, so dass der Verzunderungsschutz auf diese Weise weiter optimiert werden kann. Hierfür werden vorzugsweise solche Aluminiumplättchen ("Flakes") im Lack des erfindungsgemäßen Verfahrens eingesetzt, die als Pulver oder Paste kommerziell erhältlich sind und in dieser Darreichungsform ein Verhältnis von Dicke zu Durchmesser im Bereich von 1 : 50 bis 1 : 500 aufweisen, wobei der D50 Wert vorzugsweise im Bereich von 2 bis 10µm liegt. Ungeachtet der plättchenförmigen Dimension bestimmt sich der D50 Wert aus kumulativen Partikelgrößenverteilungen ermittelt aus dynamischen Lichtstreumessungen, wobei der D50 Wert angibt das 50 Vol.-% der Pigmentpartikel eine experimentell ermittelte Partikelgröße unterhalb des angegebenen Wertes aufweisen.

Bezüglich der Art der metallischen Pigmente von Bismut sind bei gleichzeitiger Verwendung von Aluminiumflakes sphärische Partikelformen im Lack des erfindungsgemäßen Verfahrens bevorzugt, um die für den verbesserten Verzunderungsschutz notwendige überlappende Ausrichtung der Aluminiumflakes nicht aufzuheben.

Insgesamt werden im erfindungsgemäßen Verfahren solche Lacke bevorzugt eingesetzt, für die der partikuläre Feststoffanteil, also der Anteil der die metallischen Pigmente umfasst, einen D90-Wert von weniger als 50 µm, besonders bevorzugt von weniger als 10 µm annimmt. Dieser D90-Wert gibt an, dass 90 Vol.-% des partikulären Festkörperanteils einen Durchmesser unterhalb des angegebenen Wertes aufweisen. Der D90-Wert kann in mit geeigneten Lösemitteln verdünnten Proben des Lackes anhand von volumengewichteten kumulativen Verteilungskurven, die über dynamische Lichtstreumethoden zugänglich sind, ermittelt werden.

Der Gesamtanteil der metallischen Pigmente von Aluminium und Bismut bezogen auf den partikulären Feststoffanteil des Lackes beträgt in einem bevorzugten erfindungsgemäßen Verfahren zumindest 80 Gew.-%, besonders bevorzugt zumindest 90 Gew.-% und insbesondere bevorzugt zumindest 95 Gew.-%. Hiermit wird sichergestellt, dass die ausgehärtete Lackbeschichtung einerseits eine ausreichende elektrische Leitfähigkeit und damit Punktschweißbarkeit und andererseits einen hervorragenden Verzunderungsschutz beim Warmumformen aufweist.

Das Bindemittel des aushärtbaren, pigmenthaltigen Lackes im erfindungsgemäßen Verfahren ist ausgewählt aus Hydrolysaten/Kondensaten von Silanen und/oder Siloxanen sowie aus Silikonharzen. Als Silane sind insbesondere alkoxylierte Silane mit zumindest einer kovalenten Silizium-Kohlenstoff-Bindung geeignet, wobei über die Si-C Bindung vorzugsweise aliphatische Reste gebunden sind, die zudem auch mit polaren funktionellen Gruppen wie Amino-, Hydroxyl-, Carboxyl- und Gylcidyl-Gruppen substituiert vorliegen können. Diese Silane liegen dann als Bindemittel zumeist in polaren Lösemitteln enthaltend Wasser gelöst vor und vermögen unter Abspaltung von Alkoholen zu kondensieren, so dass bei der Aushärtung ein polymeres Netzwerk unter Ausbildung von Siloxan-Einheiten entsteht.

Besonders geeignete Bindemittel in pigmenthaltigen Lacken des erfindungsgemäßen Verfahrens sind Silikonharze. Silikonharze bestehen aus Siloxan-Einheiten und werden über Kondensation unterschiedlich aliphatisch substituierter Silane gewonnen, wobei der Aufbau und Vernetzungsgrad des Silikonharzes im Wesentlichen durch die Art und das relative Mengenverhältnis dieser Silane bestimmt wird. Die Charakterisierung der Silikonharze erfolgt daher über das Verhältnis der unterschiedlichen Siloxan-Grundbausteine im polymeren Netzwerk. In monofunktionellen (M) Siloxan-Einheiten liegt eine Si-0 Verknüpfung, in difunktionellen (D) zwei Si-O Verknüpfungen, in trifunktionellen (T) drei Si-O Verknüpfungen und in tetrafunktionellen (Q) vier Si-O Verknüpfungen vor. Im erfindungsgemäßen Verfahren für den aushärtbaren pigmenthaltigen Lack sind hoch vernetzte Silikonharze bevorzugt, die aus T- und D-funktionalen Siloxan-Einheiten bestehen, wobei das Molverhältnis von T-funktionalen zu D-funktionalen Siloxan-Einheiten vorzugsweise zwischen 15: 1 und 5 :1, besonders bevorzugt zwischen 15: 1 und 10 :1 liegt.

Das Bindemittel des Lackes liegt im erfindungsgemäßen Verfahren vorzugsweise in einer Flüssigphase gelöst vor. Silikonharze sind üblicherweise gut in wenig polaren bis apolaren Lösemitteln wie Aceton, Ethylacetat, Toluol und Xylol sowie in Glykolethern löslich. Da es vorteilhaft ist, wenn das Lösemittel des Lackes beim Trocknen und Aushärten desselbigen langsam entweicht, sind organische Lösemittel, die Siedepunkte oberhalb von 100 °C aufweisen, bevorzugt.

Der Gesamtanteil des Bindemittels, insbesondere der Silikonharze, in Lacken des erfindungsgemäßen Verfahrens beträgt vorzugsweise zumindest 80 Gew.-%, besonders bevorzugt zumindest 90 Gew.-% jeweils bezogen auf den gelösten Feststoffanteil. Als Feststoffanteil wird im Rahmen der vorliegenden Erfindung der lösemittelfreie Anteil einer Rezeptur verstanden, der nach dem Eintrocknen der Rezeptur als Feststoff zurückbleibt. Dementsprechend ist der gelöste Feststoffanteil einer Rezeptur, der Trocknungsrückstands abzüglich der in der Rezeptur ehemals ungelösten partikulären Feststoffanteile.

Es hat sich gezeigt, dass im erfindungsgemäßen Verfahren für einen guten Verzunderungsschutz beim Warmumformen und eine gute Schweiß- und Elektrotauchlackierbarkeit der warmumgeformten Halbzeuge aus Stahl vorzugsweise solche Lacke aufzubringen sind, für die das gewichtsbezogene Metallpigment-Bindemittel-Verhältnis zumindest 1 : 3 ist. Jedoch ist dieses Verhältnis vorzugsweise nicht größer als 3 : 2, besonders bevorzugt nicht größer als 1 : 1, um die Metallpigmente im ausgehärteten Bindemittel ausreichend einschließen zu können, und auf diese Weise homogene Beschichtungen zu erzielen.

Die Applikation des aushärtbaren, pigmenthaltigen Lackes kann im erfindungsgemäßen Verfahren nach den im Stand der Technik bekannten Auftragsverfahren erfolgen. In den Fällen, in denen Flacherzeugnisse aus Stahl zu beschichten sind, erfolgt der Auftrag vorzugsweise im Walzenauftragsverfahren.

Vorzugsweise ist in einem erfindungsgemäßen Verfahren für die Einstellung einer Lackschichtdicke, die einen hinreichenden Verzunderungsschutz bei der Warmumformung erbringt, beim Auftrag des Lackes sicherzustellen, dass der aufgebrachte Nassfilm des Lackes einen Feststoffanteil von zumindest 2 g, vorzugsweise von zumindest 4 g bezogen auf den Quadratmeter der mit dem Nassfilm benetzten Stahloberfläche aufweist. Jedoch sollten vorzugsweise keine solchen Nassfilme aufgebracht werden, für die der Feststoffanteil oberhalb von 30 g bezogen auf den Quadratmeter der mit dem Nassfilm benetzten Stahloberfläche liegt, da ansonsten die Schweißbarkeit der warmumgeformten erfindungsgemäß beschichteten Stahloberfläche stark herabgesetzt wird, ohne dass eine weitergehende Verbesserung des Verzunderungsschutzes in der Warmumformung eintritt.

Die Aushärtung des als Nassfilm auf die mit der silikatischen Dünnschicht versehenen Stahloberfläche aufgebrachten Lackes wird in einem bevorzugten erfindungsgemäßen Verfahren bei einer maximalen Metallsubstrattemperatur (PMT) im Bereich von 150 °C - 250 °C durchgeführt.

Weiterhin ist bevorzugt, dass im erfindungsgemäßen Verfahren Flacherzeugnisse von Stahl, besonders bevorzugt in Form von Flachband oder Blechen beschichtet werden.

Im erfindungsgemäßen Verfahren werden vorzugsweise warmumformbare Stähle beschichtet. Derartige Stähle sind beispielsweise Duplex-Stähle, die mit Chrom, Nickel und Mn legiert sind, sowie Bor-Mangan-Stähle..

In einer bevorzugten Ausführungsform werden Bor-Mangan-Stähle mit folgender Legierungszusammensetzung im erfindungsgemäßen Verfahren beschichtet:

| | |
|---|---|
| 0,04-0,5 Gew.-% | Kohlenstoff |
| 0,5-3,5 Gew.-% | Mangan |
| 0,01-1,0 Gew.-% | Chrom |
| 0,0006-0,015 Gew.-% | Bor |
| weniger als 1,0 Gew.-% | Silizium |
| weniger als 0,2 Gew.-% | Titan |
| weniger als 2,0 Gew.-% | Aluminium |
| weniger als 0,1 Gew.-% | Phosphor |
| weniger als 0,015 Gew.-% | Stickstoff |
| weniger als 0,05 Gew.-% | Schwefel |

### Rest Eisen und unvermeidbare Verunreinigungen

Weiterhin umfasst die vorliegende Erfindung eine aushärtbare pigmenthaltige Lackrezeptur, die in besonderem Maße geeignet ist, im ausgehärteten Zustand auf einem mit einer silikatischen Dünnschicht versehenen Halbzeug aus Stahl einen hervorragenden Verzunderungsschutz bei der Warmumformung des Stahls zu gewähren und zudem nach der Warmumformung dem beschichteten Stahl ausgezeichnetete Schweißbarkeit zu verleihen. Eine solche erfindungsgemäße Lackrezeptur enthält
a) 10-40 Gew.-%, vorzugsweise 20-35 Gew.-% mindestens eines Silikonharzes;
b) 10-30 Gew.-%, vorzugsweise 15-25 Gew.-% an partikulärem Aluminium;
c) 1-10 Gew.-%, vorzugsweise 2-7 Gew.-% an partikulärem Bismut;
d) 20-60 Gew.-%, vorzugsweise 30-50 Gew.-% an organischen Lösemitteln;
e) weniger als 5 Gew.-% an Wasser; und
f) weniger als 5 Gew.-% an herkömmlichen Lackadditiven ausgewählt aus Pigmenten, Füllstoffen, Verlaufshilfsmitteln, Antiabsetzmitteln und/oder Rheologieadditiven,
wobei das Gewichtsverhältnis der metallischen Pigmente von Aluminium zu den metallischen Pigmenten von Bismut bezogen auf das jeweilige metallische Element im Bereich von 2 : 1 bis 15 : 1, vorzugsweise im Bereich von 4 : 1 zu 10 : 1 liegt.

Der Anteil an Füllstoffen und Pigmenten, die jeweils keine metallischen Pigmente darstellen, ist dabei vorzugsweise geringer als 4 Gew.-%, besonders bevorzugt kleiner als 2 Gew.-%, insbesondere bevorzugt kleiner als 1 Gew.-%.

Weitere bevorzugte Ausführungsformen der erfindungsgemäßen aushärtbaren pigmenthaltigen Lackrezeptur können der vorherigen Beschreibung des entsprechenden aushärtbaren, pigmenthaltigen Lacksystems entnommen werden, das im erfindungsgemäßen Beschichtungsverfahren aufgebracht wird.

Ferner umfasst vorliegende Erfindung einen Warmumformprozess bei dem ein Halbzeug aus Stahl zunächst in einem erfindungsgemäßen Verfahren wie zuvor beschrieben beschichtet und anschließend warm umgeformt wird, vorzugsweise bei einer Warmumformungstemperatur von zumindest 800 °C.

Überraschend hat sich gezeigt, dass die erfindungsgemäß beschichteten Stahlsubstrate nach der Warmumformung nicht nur hervorragend Punktschweißbar sind, sondern darüber hinaus einen im Vergleich zu warmumgeformten Verzunderungsschutzschichten, die unmittelbar also ohne metallpigmentfreie silikatische Dünnschicht aufgebracht werden, einen effektiveren Korrosionsschichtaufbau erlauben. Ein vor Korrosion schützender Lackaufbau im Sinne der vorliegenden Erfindung umfasst das Aufbringen einer anorganischen Konversionsschicht, beispielsweise einer Phosphatierung, und/oder die Aufbringung von organischen Lacksystemen, beispielsweise einer Elektrotauchlackierung. So wurde beispielsweise festgestellt, dass die korrosive Delamination von organischen Elektrotauchlacken auf phosphatierten warmumgeformten erfindungsgemäß beschichteten Stahlbauteilen signifikant reduziert werden kann. Dies ist insbesondere dann der Fall, wenn die Ausbildung der silikatischen Dünnschicht vor der Aufbringung der Verzunderungsschutzschicht in Form des aushärtbaren pigmenthaltigen Lackes nasschemisch mittel alkalischer wässriger Zusammensetzungen wie zuvor beschrieben aufgebracht wurde.

Dementsprechend umfasst die vorliegende Erfindung auch ein warmumgeformtes Stahlbauteil geeignet für elektrische Punktschweißverfahren und zur Aufbringung eines vor Korrosion schützenden organischen Lackschichtaufbaus, das auf seiner Oberfläche eine silikatische Beschichtung in einer Gesamtschichtdicke von 1 - 10 µm aufweist, wobei die silikatische Beschichtung metallische Phasen von Aluminium und Bismut enthält, erhältlich durch einen Warmumformprozess gemäß der vorliegenden Erfindung.

Bevorzugte Ausführungsformen des warmumgeformten Stahlbauteils sind durch die zuvor beschriebenen bevorzugten Ausführungsformen des erfindungsgemäßen mehrstufigen Verfahrens zur Aufbringung einer schweißbaren Verzunderungsschutzschicht auf ein Halbzeug aus Stahl und nachfolgende Warmumformung des Halbzeugs zum Stahlbauteil bei einer Warmumformungstemperatur von zumindest 800 °C erhältlich.

### Ausführungsbeispiele:

Im Folgenden wurden die Eigenschaften verschiedener Verzunderungsschutzschichten nach einem für die Warmumformung typischen Glühprozess bestimmt. So wurden Stahlbleche des Typs 22MnB5 zunächst mit oder ohne Aufbringung einer silikatischen Dünnschicht mit einer Silikonharz- und Metallpigment-haltigen Lackrezeptur gemäß der Tabelle 1 beschichtet und bei einer Ofentemperatur von 300 °C bis zum Erreichen einer PMT von 180 °C ausgehärtet, wobei jeweils eine Trockenfilmdicke von 2 µm eingestellt wurde. Die derartig beschichteten Stahlbleche wurden sodann bei 950 °C für 7 Minuten im Ofen ohne Schutzgas geglüht und entsprechende Messungen an den geglühten Beschichtungen vorgenommen.

| Tab.1 | | | |
|---|---|---|---|
| Zusammensetzungen des aushärtbaren pigmenthaltigen Lackes | | | |
| | E1 | E2 | CE1 |
| Silikonharz Molverhältnis T/D = 12,3 | 25,65 | 23,35 | 30,42 |
| Aluminiumflakes D50 Wert = 5 µm | 14,13 | 13,05 | 19,70 |
| Bismutpulver D90 Wert = 50 µm | 2,86 | 16,10 | - |
| Xylol | 9,25 | 8,52 | 10,97 |
| n- Butoxypropanol | 48,11 | 38,48 | 38,91 |
| Summe | 100 | 100 | 100 |
| Pigment-Bindemittel-Verhältnis | 0,66 | 1,25 | 0,65 |
| Gewichtsverhältnis Al : Bi | 4,9 | 0,8 | - |

Eine nennenswerte Verzunderung oder gar die Ausbildung einer Zunderschicht konnte nach dem Glühen bei 950 °C im Ofen auf keinem der gemäß Tabelle 2 beschichteten Stahlbleche beobachtet werden.

| Tab. 2 | | | | | |
|---|---|---|---|---|---|
| Eigenschaften der Verzunderungsschutzschicht auf Stahl (22MnB5) nach dem Glühen bei 950 °C für 7 Minuten | | | | | |
| | | E1 | | CE1 | |
| Silikatische Dünnschicht ^{#} (50 mg/m² Si) | | Nein | Ja | Nein | Ja |
| Adhäsion ¹ | | n.i.O. | i.O. | i.O. | i.O. |
| Korrosionsschutz ² | | i.O. | i.O. | n.i.O. | i.O. |
| Schweißbarkeit ³ | | 126 | 120 | <20 | <10 |
| ^{#} | Die silikatische Dünnschicht wurde durch Aufbringung eines entsprechenden Nassfilms einer alkalischen wässrigen Zusammensetzung aus 2 Gew.-% Kaliwasserglas 28/30 und 0,4 Gew.-% 3-Aminopropyltrimethoxysilan und anschließender Trocknung bei 80 °C für 15 Minuten erzeugt | | | | |
| ¹ | ermittelt nach Klebestreifenabzugtest (keine Lackrückstände auf Klebeband = i.O.) | | | | |
| ² | ermittelt durch Klebestreifenabzugtest am Ritz nach Zinkphosphatierung und Elektrotauchlackierung (ca. 20 µm EV2007, Fa. PPG) der geglühten beschichten Stähle nach 72 Stunden im konstanten Kondenswassertest bei 40 °C und 100% Luftfeuchte nach DIN EN ISO 6270-2 Lackrückstände auf Klebeband = | | | | |
| ³ | Anzahl der möglichen Schweißpunkte mit Punktschweißmaschine (DALEX PMS 11-4; Schweißstrom 7kA, Elektrodenanpresskraft 4,5 kN, Schweißdauer 18 Perioden Kupferelektroden F16) | | | | |

Die Adhäsion der geglühten Beschichtungen auf den Stahlblechen wurde mittels Klebestreifenabzugtest geprüft. Dabei zeigt sich, dass die zusätzliche Anwesenheit von Bismut in der Lackrezeptur die Adhäsion der Beschichtung nach dem Glühen bei 950 °C herabsetzt (E1 im Vergleich zu CE1 jeweils ohne silikatische Dünnschicht).

Bei erfindungsgemäß beschichteten Stahlblechen, auf denen vor der Applikation der Lackrezeptur nach Tabelle 1 eine silikatische Dünnschicht aufgebracht wurde, wurde die durch den Bismut-Anteil hervorgerufene Schwächung der Adhäsion wieder aufgehoben und eine gute Haftung der Beschichtung festgestellt (E1 mit silikatischer Dünnschicht). Die mit einer Lackrezeptur E2 beschichteten und anschließend geglühten Stahlbleche hafteten schlechter als die mit der Lackrezeptur E1 beschichteten Bleche und wurden nicht weiter untersucht. Dies ist auf das ungünstige Gewichtsverhältnis der Metallpigmente zurückzuführen, das sich durch einen hohen relativen Bismut-Anteil auszeichnet.

Die Zumischung eines Anteils an partikulären metallischem Bismut verbessert jedoch deutlich die elektrische Punktschweißbarkeit. Dies unabhängig davon, ob die Lackrezeptur unmittelbar auf die Stahloberfläche oder auf die silikatische Erstbeschichtung aufgebracht wurde.

Bemerkenswert ist, dass sämtliche geglühten Stahlbleche zinkphosphatiert und elektrotauchlackiert werden konnten. Die Stabilität eines solchen Schichtaufbaus gegenüber korrosiver Delamination wurde im Kondenswassertest ermittelt. Es zeigte sich, dass die geglühten und entsprechend nachträglich beschichteten Stahlbleche im Klebestreifenabzugstest dann ein gutes Ergebnis erzielten, wenn vor dem Glühprozess eine Erstbeschichtung der Stahlbleche mit einer silikatischen Dünnschicht erfolgte.

Insgesamt erwiesen sich die erfindungsgemäß beschichteten Stahlbleche als hervorragend punktschweißbar, gut auf dem Stahlsubstrat haftend und zeigten nach Korrosionsschutzschichtaufbau die besten Korrosionsergebnisse.

## Patentansprüche

1. Mehrstufiges Verfahren zur Aufbringung einer schweißbaren Verzunderungsschutzschicht auf Stahl, bei dem auf der metallischen Stahloberfläche zunächst eine metallpigmentfreie silikatische Dünnschicht erzeugt und anschließend ein Nassfilm eines aushärtbaren pigmenthaltigen Lackes aufgebracht und ausgehärtet wird, wobei der aushärtbare pigmenthaltige Lack ein in einer Flüssigphase gelöstes Bindemittel, das Hydrolysate und/oder Kondensate mindestens eines Silans/Siloxans und/oder mindestens ein Silikonharz umfasst, und sowohl zumindest ein metallisches Pigment von Aluminium als auch zumindest ein metallisches Pigment von Bismut jeweils in partikulärer Form enthält.

2. Verfahren gemäß Anspruch 1, **dadurch gekennzeichnet, dass** der Anteil von Aluminium im Lack bezogen auf den Feststoffanteil zumindest 20 Gew.-%, vorzugsweise zumindest 30 Gew.-% beträgt, jedoch vorzugsweise 60 Gew.-% nicht überschreitet.

3. Verfahren gemäß einem oder beiden der vorherigen Ansprüche, **dadurch gekennzeichnet, dass** das Gewichtsverhältnis der metallischen Pigmente von Aluminium zu den metallischen Pigmenten von Bismut im Lack bezogen auf das jeweilige metallische Element im Bereich von 2 : 1 bis 15 : 1, vorzugsweise im Bereich von 4 : 1 zu 10 : 1 liegt.

4. Verfahren gemäß einem oder mehreren der vorherigen Ansprüche, **dadurch gekennzeichnet, dass** die metallischen Pigmente von Aluminium im Lack plättchenförmig vorliegen.

5. Verfahren gemäß einem oder mehreren der vorherigen Ansprüche, **dadurch gekennzeichnet, dass** die metallischen Pigmente von Bismut im Lack eine sphärische Form aufweisen.

6. Verfahren gemäß einem oder mehreren der vorherigen Ansprüche, **dadurch gekennzeichnet, dass** die partikulären Feststoffanteile des Lackes einen D90 Wert von weniger als 50 µm, vorzugsweise von weniger als 10 µm aufweisen.

7. Verfahren gemäß einem oder mehreren der vorherigen Ansprüche, **dadurch gekennzeichnet, dass** der Gesamtanteil der metallischen Pigmente von Aluminium und Bismut bezogen auf den partikulären Feststoffanteil des Lackes zumindest 80 Gew.-%, vorzugsweise zumindest 90 Gew.-% und besonders bevorzugt zumindest 95 Gew.-% beträgt.

8. Verfahren gemäß einem oder mehreren der vorherigen Ansprüche, **dadurch gekennzeichnet, dass** das Bindemittel des Lackes ausgewählt ist aus mindestens einem Silikonharz, vorzugsweise aus Silikonharzen bestehend aus T- und D-funktionalen Siloxan-Einheiten, wobei das Molverhältnis von T-funktionalen zu D-funktionalen Siloxan-Einheiten vorzugsweise zwischen 15 : 1 und 5 : 1 liegt.

9. Verfahren gemäß Anspruch 8, **dadurch gekennzeichnet, dass** der Gesamtanteil der Silkonharze bezogen auf den gelösten Feststoffanteil des Lackes zumindest 80 Gew.-%, vorzugsweise zumindest 90 Gew.-% beträgt.

10. Verfahren gemäß einem oder mehreren der vorherigen Ansprüche, **dadurch gekennzeichnet, dass** das gewichtsbezogene Metallpigment-Bindemittel-Verhältnis im Lack zumindest 1 : 3, vorzugsweise zumindest 1 : 2, jedoch nicht größer als 3 : 2 ist.

11. Verfahren gemäß einem oder mehreren der vorherigen Ansprüche, **dadurch gekennzeichnet, dass** die metallpigmentfreie silikatische Dünnschicht nasschemisch aufgebracht wird und vor der Aufbringung des aushärtbaren pigmenthaltigen Lackes vorzugsweise ein Trocknungsschritt folgt.

12. Verfahren gemäß Anspruch 11, **dadurch gekennzeichnet, dass** die metallpigmentfreie silikatische Dünnschicht durch In-Kontakt-Bringen der metallischen Stahloberfläche mit einer alkalischen wässrigen Zusammensetzung aufgebracht wird, die
a) Wasserglas mit einem molaren Verhältnis von SiO₂ zu M₂O von zumindest 3 : 2, aber nicht mehr als 7 : 1, wobei M ausgewählt ist aus Alkalimetallen und/oder quarternären Ammoniumverbindungen, und
b) ein oder mehrere Organosilane (A) enthält, die jeweils zumindest einen hydrolysierbaren Substituenten aufweisen, der bei Hydrolyse als Alkohol, der bei einem Atmosphärendruck von 1 bar einen Siedepunkt unterhalb von 100 °C aufweist, abgespalten wird, und die am jeweiligen Silizium-Atom ein bis drei nicht hydrolysierbare Substituenten tragen, wobei die Gesamtzahl der Substituenten an den jeweiligen Siliziumatomen der Organosilane (A) vier ist,
wobei das molare Verhältnis der Gesamtmenge an Organosilanen mit zumindest einem hydrolysierbaren Substituenten bezogen auf das Element Silizium zur Gesamtmenge an Silizium-Atomen kleiner als 1 : 3 ist, jedoch vorzugsweise zumindest 1 : 20 beträgt.

13. Verfahren gemäß Anspruch 12, **dadurch gekennzeichnet, dass** die nicht hydrolysierbaren Substituenten der Organosilane (A) der alkalischen wässrigen Zusammensetzung zumindest eine primäre Amino-Gruppe aufweisen.

14. Verfahren gemäß einem oder mehreren der vorherigen Ansprüche, **dadurch gekennzeichnet, dass** die metallpigmentfreie silikatische Dünnschicht in einer Schichtauflage von zumindest 10 mg/m², vorzugsweise zumindest 40 mg/m², jedoch vorzugsweise von nicht mehr als 200 mg/m² jeweils bezogen auf das Element Silizium auf die metallische Stahloberfläche aufgebracht wird.

15. Verfahren gemäß einem oder mehreren der vorherigen Ansprüche, **dadurch gekennzeichnet, dass** der Nassfilm des Lackes einen Feststoffanteil von zumindest 2 g, vorzugsweise von zumindest 4 g, aber vorzugsweise von nicht mehr als 30 g jeweils bezogen auf den Quadratmeter der mit dem Nassfilm benetzten Stahloberfläche aufweist.

16. Verfahren gemäß einem oder mehreren der vorherigen Ansprüche, **dadurch gekennzeichnet, dass** nach dem Aufbringen des Lackes ein Trocknungsschritt erfolgt, wobei die maximale Metallsubstrattemperatur bevorzugt zumindest 150 °C, jedoch vorzugsweise nicht mehr als 250 °C beträgt.

17. Aushärtbare pigmenthaltige Lackrezeptur zur Aufbringung einer Verzunderungsschutzschicht auf Stahl enthaltend
a) 10-40 Gew.-%, vorzugsweise 20-35 Gew.-% mindestens eines Silikonharzes;
b) 10-30 Gew.-%, vorzugsweise 15-25 Gew.-% an partikulärem Aluminium;
c) 1-10 Gew.-%, vorzugsweise 2-7 Gew.-% an partikulärem Bismut;
d) 20-60 Gew.-%, vorzugsweise 30-50 Gew.-% an organischen Lösemitteln;
e) weniger als 5 Gew.-% an Wasser; und
f) weniger als 5 Gew.-% an weiteren Lackadditiven ausgewählt aus Pigmenten, Füllstoffen, Verlaufshilfsmitteln, Antiabsetzmitteln und/oder Rheologieadditiven;
wobei das Gewichtsverhältnis der metallischen Pigmente von Aluminium zu den metallischen Pigmenten von Bismut bezogen auf das jeweilige metallische Element im Bereich von 2 : 1 bis 15 : 1, vorzugsweise im Bereich von 4 : 1 zu 10 : 1 liegt.

18. Warmumformprozess bei dem ein Halbzeug aus Stahl zunächst in einem Verfahren gemäß einem oder mehreren der Ansprüche 1 bis 16 beschichtet und anschließend warm umgeformt wird, vorzugsweise bei einer Warmumformungstemperatur von zumindest 800 °C.

19. Warmumgeformtes Stahlbauteil, das auf seiner Oberfläche eine silikatische Beschichtung in einer Gesamtschichtdicke von 1 - 10 µm aufweist, wobei die silikatische Beschichtung metallische Phasen von Aluminium und Bismut enthält, erhältlich in einem Warmumformprozess gemäß Anspruch 18.

## Claims

1. Multi-stage method for applying a weldable anti-scaling protective layer to steel, in which initially a thin silicatic layer free of metal pigments is produced on the metallic steel surface, and subsequently a wet film of a curable, pigment-containing paint is applied and cured, wherein the curable, pigment-containing paint contains a binder which is dissolved in a liquid phase and which comprises hydrolysates and/or condensates of at least one silane/siloxane and/or at least one silicone resin, and also contains at least one metallic pigment of aluminum and at least one metallic pigment of bismuth, in each case in particulate form.

2. Method according to Claim 1, **characterized in that** the content of aluminum in the paint, based on the solids fraction, is at least 20% by weight, preferably at least 30% by weight, but preferably does not exceed 60% by weight.

3. Method according to one or both of the preceding claims, **characterized in that** the weight ratio of the metallic pigments of aluminum to the metallic pigments of bismuth in the paint, based on the respective metallic element, is in a range of 2:1 to 15:1, preferably in a range of 4:1 to 10:1.

4. Method according to one or more of the preceding claims, **characterized in that** the metallic pigments of aluminum are present in the paint in the form of flakes.

5. Method according to one or more of the preceding claims, **characterized in that** the metallic pigments of bismuth in the paint have a spherical shape.

6. Method according to one or more of the preceding claims, **characterized in that** the particulate solids fractions of the paint have a D90 value of less than 50 µm, preferably less than 10 µm.

7. Method according to one or more of the preceding claims, **characterized in that** the total content of the metallic pigments of aluminum and bismuth, based on the particulate solids fraction of the paint, is at least 80% by weight, preferably at least 90% by weight, and particularly preferably at least 95% by weight.

8. Method according to one or more of the preceding claims, **characterized in that** the binder of the paint is selected from at least one silicone resin, preferably from silicone resins made up of T- and D-functional siloxane units, wherein the molar ratio of T-functional to D-functional siloxane units is preferably between 15:1 and 5:1.

9. Method according to Claim 8, **characterized in that** the total content of the silicone resins, based on the dissolved solids fraction of the paint, is at least 80% by weight, preferably at least 90% by weight.

10. Method according to one or more of the preceding claims, **characterized in that** the weight-based metal pigment-binder ratio in the paint is at least 1:3, preferably at least 1:2, but not greater than 3:2.

11. Method according to one or more of the preceding claims, **characterized in that** the thin silicatic layer free of metal pigments is applied by wet chemical means, and a drying step preferably follows prior to the application of the curable pigment-containing paint.

12. Method according to Claim 11, **characterized in that** the thin silicatic layer free of metal pigments is applied by bringing the metallic steel surface into contact with an alkaline aqueous composition containing
a) water glass with a molar ratio of SiO₂ to M₂O of at least 3:2, but not greater than 7:1, M being selected from alkali metals and/or quaternary ammonium compounds, and
b) one or more organosilanes (A) which in each case contain at least one hydrolyzable substituent which during hydrolysis is cleaved as an alcohol having a boiling point below 100°C at an atmospheric pressure of 1 bar, and which bear one to three nonhydrolyzable substituents on the respective silicon atom, the total number of substituents on the respective silicon atoms of the organosilanes (A) being four,
wherein the molar ratio of the total quantity of organosilanes having at least one hydrolyzable substituent, based on the element silicon, to the total quantity of silicon atoms is less than 1:3, but preferably at least 1:20.

13. Method according to Claim 12, **characterized in that** the nonhydrolyzable substituents of the organosilanes (A) of the alkaline aqueous composition contain at least one primary amino group.

14. Method according to one or more of the preceding claims, **characterized in that** the thin silicatic layer free of metal pigments is applied to the metallic steel surface in a coating layer of at least 10 mg/m², preferably at least 40 mg/m², but preferably not more than 200 mg/m², in each case based on the element silicon.

15. Method according to one or more of the preceding claims, **characterized in that** the wet film of the paint has a solids fraction of at least 2 g, preferably at least 4 g, but preferably not more than 30 g, in each case based on the square meters of steel surface wetted with the wet film.

16. Method according to one or more of the preceding claims, **characterized in that** after the paint is applied a drying step takes place, wherein the maximum metal substrate temperature is preferably at least 150°C, but preferably not greater than 250°C.

17. Curable pigment-containing paint formulation for applying an anti-scaling protective layer to steel, containing
a) 10-40% by weight, preferably 20-35% by weight, of at least one silicone resin;
b) 10-30% by weight, preferably 15-25% by weight, of particulate aluminum;
c) 1-10% by weight, preferably 2-7% by weight, of particulate bismuth;
d) 20-60% by weight, preferably 30-50% by weight, of organic solvents;
e) less than 5% by weight of water; and
f) less than 5% by weight of further paint additives selected from pigments, fillers, flow control agents, anti-settling agents, and/or rheological additives;
wherein the weight ratio of the metallic pigments of aluminum to the metallic pigments of bismuth, based on the respective metallic element, is in a range of 2:1 to 15:1, preferably in a range of 4:1 to 10:1.

18. Hot forming process in which a semi-finished product made of steel is initially coated in a method according to one or more of Claims 1 to 16, and is subsequently hot formed, preferably at a hot forming temperature of at least 800°C.

19. Hot-formed steel component having a silicatic coating on its surface in a total layer thickness of 1-10 µm, wherein the silicatic coating contains metallic phases of aluminum and bismuth, the hot-formed steel component being obtainable in a hot forming process according to Claim 18.

## Revendications

1. Procédé à plusieurs étapes d'application d'une couche anti-calaminage soudable sur de l'acier, dans lequel on génère tout d'abord sur la surface d'acier métallique une mince couche de silicate sans pigment métallique puis on applique et on fait durcir un film humide d'une peinture durcissable contenant des pigments, la peinture durcissable contenant des pigments comprenant un liant, qui est dissout dans une phase liquide et qui comporte des hydrolysats et/ou des condensats d'au moins un silane/siloxane et/ou au moins une résine de silicone, et comprenant également au moins un pigment métallique d'aluminium ainsi qu'au moins un pigment métallique de bismuth se présentant sous une forme particulière..

2. Procédé selon la revendication 1, **caractérisé en ce que** la proportion d'aluminium dans la peinture, rapportée à la proportion de matières solides, n'est pas supérieure à au moins 20% en poids, de préférence au moins 30% en poids, mais de préférence 60% en poids.

3. Procédé selon l'une des revendications précédentes ou les deux, **caractérisé en ce que** le rapport en poids des pigments métalliques d'aluminium sur les pigments métalliques de bismuth dans la peinture, rapporté à l'élément métallique particulier, est dans la gamme de 2:1 à 15:1, de préférence dans la gamme de 4:1 à 10:1.

4. Procédé selon l'une ou plusieurs des revendications précédentes, **caractérisé en ce que** les pigments métalliques d'aluminium dans la peinture se présentent sous forme de paillettes.

5. Procédé selon l'une ou plusieurs des revendications précédentes, **caractérisé en ce que** les pigments métalliques de bismuth dans la peinture ont une forme sphérique.

6. Procédé selon l'une ou plusieurs des revendications précédentes, **caractérisé en ce que** les proportions de matières solides particulaires dans la peinture ont une valeur D90 inférieure à 50 µm, de préférence inférieure à 10 µm.

7. Procédé selon l'une ou plusieurs des revendications précédentes, **caractérisé en ce que** la proportion totale des pigments métalliques d'aluminium et de bismuth, rapportée à la proportion de matières solides particulaires de la peinture, est d'au moins 80% en poids, de préférence d'au moins 90% en poids, de manière particulièrement préférée d'au moins 95% en poids.

8. Procédé selon l'une ou plusieurs des revendications précédentes, **caractérisé en ce que** le liant de la peinture est choisi dans le groupe constitué d'au moins une résine de silicone, de préférence de résines de silicone constituées d'unités siloxane T- et D-fonctionnelles, le rapport molaire des unités siloxane T-fonctionnelles sur les unités siloxane D-fonctionnelles étant de préférence compris entre 15:1 et 5:1.

9. Procédé selon la revendication 8, **caractérisé en ce que** la proportion totale des résines de silicone, rapportée à la proportion de matières solides dissoutes de la peinture, est d'au moins 80% en poids, de préférence d'au moins 90% en poids.

10. Procédé selon l'une ou plusieurs des revendications précédentes, **caractérisé en ce que** le rapport en poids liant sur pigment métallique dans la peinture est d'au moins 1:3, de préférence d'au moins 1:2, mais non supérieur à 3:2.

11. Procédé selon l'une ou plusieurs des revendications précédentes, **caractérisé en ce que** l'on applique la mince couche de silicate sans pigment métallique par voie chimique humide puis on réalise de préférence une étape de séchage avant d'appliquer la peinture durcissable contenant des pigments.

12. Procédé selon la revendication 11, **caractérisé en ce que** l'on applique la mince couche de silicate sans pigment métallique en mettant en contact la surface d'acier métallique avec une composition aqueuse alcaline qui contient
a) du silicate de soude ayant un rapport molaire SiO₂ sur M₂O d'au moins 3:2, mais de pas plus de 7:1, M étant choisi parmi les métaux alcalins et/ou les composés d'ammonium quaternaire, et
b) un ou plusieurs organosilanes (A) qui possèdent chacun au moins un substituant hydrolysable, qui est éliminé par hydrolyse sous la forme d'un alcool qui a un point d'ébullition inférieur à 100°C à une pression atmosphérique de 1 bar, et qui portent un à trois substituants non hydrolysables sur l'atome de silicium respectif, le nombre total de substituants sur les atomes de silicium respectifs des organosilanes (A) étant de quatre,
le rapport molaire de la quantité totale d'organosilanes comportant au moins un substituant hydrolysable, par rapport à l'élément silicium, sur la quantité totale d'atomes de silicium est inférieur à 1:3, mais de préférence d'au moins 1:20.

13. Procédé selon la revendication 12, **caractérisé en ce que** les substituants non hydrolysables des organosilanes (A) de la composition aqueuse alcaline comportent au moins un groupe amino primaire.

14. Procédé selon l'une ou plusieurs des revendications précédentes, **caractérisé en ce que** l'on applique la mince couche de silicate sans pigment métallique sur la surface métallique d'acier à raison d'au moins 10 mg/m², de préférence d'au moins 40 mg/m², mais de préférence de pas plus de 200 mg/m², à chaque fois par rapport à l'élément silicium.

15. Procédé selon l'une ou plusieurs des revendications précédentes, **caractérisé en ce que** le film humide de la peinture comporte une proportion de matières solides d'au moins 2 g, de préférence d'au moins 4 g, mais de préférence de pas plus de 30 g, à chaque fois par rapport au mètre carré de la surface d'acier humidifiée avec le film humide.

16. Procédé selon l'une ou plusieurs des revendications précédentes, **caractérisé en ce que**, après avoir appliqué la peinture, on réalise une étape de séchage, la température maximale du substrat métallique étant de préférence d'au moins 150°C, mais de préférence non supérieure à 250°C.

17. Formulation d'une peinture durcissable contenant des pigments, destinée à l'application d'une couche d'anti-calaminage sur de l'acier, ladite formulation contenant
a) 10 à 40% en poids, de préférence 20 à 35% en poids, d'au moins une résine de silicone ;
b) 10 à 30% en poids, de préférence 15 à 25% en poids, d'aluminium particulaire ;
c) 1 à 10% en poids, de préférence 2 à 7% en poids de bismuth particulaire ;
d) 20 à 60% en poids, de préférence 30 à 50% en poids, de solvants organiques ;
e) moins de 5% en poids d'eau ; et
f) moins de 5% en poids d'autres additifs de peinture choisis parmi les pigments, les charges, les agents d'écoulement, les agents anti-sédimentation et/ou les additifs rhéologiques ;
le rapport en poids des pigments métalliques d'aluminium sur les pigments métalliques de bismuth, par rapport à l'élément métallique respectif, est dans la gamme de 2:1 à 15:1, de préférence dans la gamme de 4;1 à 10:1.

18. Processus de formage à chaud, dans lequel on applique tout d'abord un revêtement sur un acier semi-fini conformément à un procédé selon l'une ou plusieurs des revendications 1 à 16 puis on effectue un formage à chaud, de préférence à une température de formage à chaud d'au moins 800°C.

19. Composant en acier formé à chaud qui comporte sur sa surface un revêtement de silicate d'une épaisseur totale de 1 à 10 µm, le revêtement de silicate contenant des phases métalliques d'aluminium et de bismuth qui sont obtenues dans un processus de formage à chaud selon la revendication 18.
